# EUROPÄISCHE PATENTSCHRIFT

(11) **EP 0 649 817 B1**
(45) Veröffentlichungstag und Bekanntmachung des Hinweises auf die Patenterteilung: **11.03.1998**
(21) Anmeldenummer: 94116053.3
(22) Anmeldetag: 12.10.1994
(51) Int. Cl.: C01G 39/02

(54) **Feinteiliges blaues Molybdänoxid**
Finely divided blue molybdenum oxide
Oxyde de molybdène bleu finement divisé

(30) Priorität: 20.10.1993 DE 4335725
(43) Veröffentlichungstag der Anmeldung: 26.04.1995
(73) Patentinhaber: BASF Aktiengesellschaft, 67063 Ludwigshafen (DE)
(72) Erfinder: Adel, Jörg, Dr., D-67071 Ludwighafen (DE); Czech, Erwin, Dr., D-68647 Biblis (DE)

(56) Entgegenhaltungen:
- FR-A- 2 606 395

## Beschreibung

Die vorliegende Erfindung betrifft neues blaues Molybdänoxid, erhältlich durch oxidative Zersetzung von Molybdänhexacarbonyl in der Gasphase bei 100 bis 500°C.

Weiterhin betrifft die Erfindung die Herstellung dieses Molybdänoxids und seine Verwendung zum Pigmentieren von Lacken, Druckfarben, Tinten und Kunststoffen sowie zur Herstellung von Tonern für die Elektrophotographie.

In der Elektrophotographie wird durch selektive Belichtung einer elektrostatisch aufgeladenen Photoleiterwalze mit vom zu kopierenden Original reflektiertem Licht ein latentes elektrostatisches Bild erzeugt. Beim Laserdrucker geschieht dies durch einen Laserstrahl.

Zur Entwicklung des elektrostatischen Bildes werden Tonerteilchen über eine "Magnetbürste", das sind entlang der Feldlinien eines Sektormagneten ausgerichtete Carrierteilchen, zur Photoleiterwalze transportiert. Die Tonerteilchen haften dabei elektrostatisch an den Carrierteilchen und erhalten beim Transport im Magnetfeld durch Reibung eine den Carrierteilchen entgegengesetzte elektrostatische Aufladung. Die so von der Magnetbürste auf die Photoleiterwalze übertragenen Tonerteilchen ergeben ein "Tonerbild", das anschließend auf elektrostatisch aufgeladenes Papier übertragen und fixiert wird.

Um kräftige, konturenscharfe Bilder zu erhalten, werden dem Toner zur Stabilisierung seiner elektrostatischen Aufladung sog. Ladungsstabilisatoren (charge controlling agent) zugesetzt.

Insbesondere für blaue Toner besteht noch ein Bedarf an geeigneten, einen ähnlichen Farbton aufweisenden Ladungsstabilisatoren.

Blaue Molybdänverbindungen sind zwar schon seit langem bekannt. Sie werden entweder durch Reduktion von Molybdäntrioxid oder Alkalimolybdaten (VI) in wäßriger Lösung z.B. mit Zink und Salzsäure, mit Schwefelwasserstoff oder anderen Reduktionsmitteln hergestellt. Die Zusammensetzung dieser Verbindungen ist im allgemeinen nicht ganz genau bekannt; sie enthalten wechselnde Mengen an Wasser und Molybdän (IV) und Molybdän (V) und sind, wie durch Röntgenbeugung nachgewiesen werden kann, kristallin.

Bekannt sind Verbindungen der Zusammensetzung Mo₂O₄(OH)₂ und Mo₄O₁₀(OH)₂, deren Röntgendiffraktogramme beschrieben sind (O. Glemser, G. Lutz, G. Meyer; Z. anorg. allg. Chem. 285, 173-180 (1956)). Diese Verbindungen sind jedoch nicht sehr stabil und verändern sich bei längerer Lagerung und in Wasser. Daher werden sie auch nicht als Pigment verwendet (s. H. Knittel, "Pigmente", 3. Aufl., S. 298, Wiss. Verlagsges. Stuttgart, 1960).

Weiterhin ist eine Reihe von definierten kristallinen Phasen der allgemeinen Zusammensetzung MoₙO₃ₙ₋₁ bekannt, die sogenannten Magneli-Phasen. Sie bilden sich durch Erhitzen von MoO₃ im Vakuum oder durch Reduktion von MoO₃ mit metallischem Molybdän bei hohen Temperaturen. Bekannte anhand von Einkristallstrukturuntersuchungen charakterisierte Verbindungen sind z.B. Mo₄O₁₁, Mo₈O₂₃ und Mo₉O₂₆. Ihre Struktur leitet sich von der des ReO₃ ab (s. "Magneli-Phases", Comprehensive Inorganic Chemistry, Bd. 4, S. 491-497, Pergamon Press, 1973). Aber auch bei diesen Phasen ist keine technische Anwendung denkbar, da eine gezielte Herstellung in großem Maßstab nicht möglich ist.

In der FR-A 2 606 395 ist die Herstellung von feinteiligen Oxiden der Metalle Titan, Zirkon und Eisen durch Zersetzung gasförmiger Ausgangsverbindungen bei hohen Temperaturen (≥ 1000°C) beschrieben.

Der Erfindung lag die Aufgabe zugrunde, neue insbesondere auch für blaue Toner geeignete Ladungsstabilisatoren mit günstigem Eigenschaftsprofil bereitzustellen.

Demgemäß wurde blaues Molybdänoxid, erhältlich durch oxidative Zersetzung von Molybdänhexacarbonyl in der Gasphase bei 100 bis 500°C, gefunden.

Weiterhin wurde ein Verfahren zur Herstellung dieses Molybdänoxids gefunden, welches dadurch gekennzeichnet ist, daß man gasförmiges Molybdänhexacarbonyl bei 100 bis 500°C in einer sauerstoffhaltigen Atmosphäre oxidativ zersetzt.

Außerdem wurde die Verwendung dieses Molybdänoxids zum Einfärben von Lacken, Druckfarben, Tinten und Kunststoffen sowie zur Herstellung von Tonern für die Elektrophotographie gefunden.

Nicht zuletzt wurden elektrostatische Toner gefunden, welche dieses Molybdänoxid als Ladungsstabilisator enthalten.

Bei der erfindungsgemäßen Herstellung aus der Gasphase wird ein neues, äußerst feinteiliges, blaues Produkt erhalten, das eine Teilchengrößenverteilung von in der Regel 2 bis 100 nm, bevorzugt 10 bis 50 nm aufweist und röntgenamorph ist. Auch bei Elektronenbeugung (MAD, Micro Area Diffraction) ist keine geordnete Kristallstruktur zu erkennen. Die Primärteilchen sind im Mittel um 20 nm groß und nach transmissionselektronenmikroskopischen Untersuchungen zu Ketten agglomeriert.

Bei elektronenspektroskopischer Untersuchung (ESCA) ergeben sich für das erfindungsgemäße Molybdänoxid Signale bei 231,6 und 232,9 eV, die Molybdän (V) bzw. Molybdän (VI) zugeordnet werden können. Durch Linienformanalyse kann ein Verhältnis von 10 % Molybdän (V) und 90 % Molybdän (VI) ermittelt werden, was rein rechnerisch einer Zusammensetzung von MoO_{2,95} bzw. Mo₂₀O₅₉ entspricht. Bei einer Elementaranalyse wird für das erfindungsgemäße Produkt ein Gehalt von etwa 63 bis 65 Gew.-% Molybdän, < 0,3 Gew.-% Kohlenstoff und < 0,1 Gew.-% Stickstoff gefunden.

Das erfindungsgemäße Molybdänoxid ist in Wasser unbegrenzt stabil und löst sich kolloidal mit tiefblauer Farbe. Aus der kolloidalen Lösung kann es problemlos durch Eindampfen zurückgewonnen werden.

Bei dem erfindungsgemäßen Verfahren zur Herstellung des neuen Molybdänoxids wird gasförmiges Molybdänhexacarbonyl bei in der Regel 100 bis 500°C, bevorzugt bei 100 bis 400°C und besonders bevorzugt bei 200 bis 300°C, in einer sauerstoffhaltigen Atmosphäre, z.B. Luft, oxidativ zersetzt.

Eine bevorzugte Ausführungsform des erfindungsgemäßen Verfahrens besteht darin, das Molybdänhexacarbonyl zunächst durch Überleiten eines inerten Gasstroms wie Argon oder insbesondere Stickstoff bei üblicherweise 20 bis 100°C zu verdampfen und dann der oxidativen Zersetzung zu unterwerfen.

Das feinteilige Molybdänoxid kann mit Hilfe des erfindungsgemäßen Verfahrens einfach und reproduzierbar hergestellt werden. Aufgrund seiner vorteilhaften Eigenschaften ist es vielfältig verwendbar, z.B. zum Einfärben von Lacken, Druckfarben und Kunststoffen sowie auch als Füllstoff für Polymere. In diesen meist organischen Anwendungsmedien liegt das erfindungsgemäße Molybdänoxid als Pigment vor, während es in wäßrigem Medium kolloidal gelöst ist und sich daher auch nicht zuletzt wegen seiner hohen Stabilität hervorragend zur Herstellung von Tinten eignet.

Schließlich ist das erfindungsgemäße Molybdänoxid auch besonders als Ladungsstabilisator für elektrostatische Toner geeignet. Aufgrund seiner Feinteiligkeit ist es leicht in der Tonerzubereitung verteilbar, es ist thermisch stabil und unempfindlich gegen Feuchtigkeit und hat eine stark ladungsstabilisierende Wirkung.

### Beispiele

A) Herstellung des erfindungsgemäßen Molybdänoxids
Die Reaktionsapparatur bestand aus einem Glaskolben mit Gaseinleitungsrohr, der direkt an einen elektrisch beheizbaren Rohrreaktor mit Gasversorgung angeschlossen war, von dem eine Leitung zu einem Zyklon und zwei 30-l-Gefäßen und danach zu einer Abgasentsorgung führte.
40 g Molybdänhexacarbonyl wurden unter Überleiten von 120 l/h Stickstoff in dem Glaskolben auf 80°C erhitzt. Gleichzeitig wurden 350 l/h Luft durch den auf 230°C Innentemperatur aufgeheizten Rohrreaktor geleitet.
Das verdampfte und durch den Luftstrom zu Molybdänoxid zersetzte Molybdänhexacarbonyl schied sich feinteilig im Zyklon und den 30-l-Gefäßen ab.
Es wurden 5 g blaues Molybdänoxid mit einer mittleren Teilchengröße von 20 nm und einem Molybdängehalt von 63 Gew.-% erhalten.
B) Koloristische Beurteilung des erfindungsgemäßen Molybdänoxids
0,5 g Molybdänoxid wurden in 5,0 g eines Polyester-Mischlackes mit 21 Gew.-% Feststoffanteil eingerührt und 2 min mit 5-mm-Glasperlen im Red Devil dispergiert. Mit einer Rakel (100 µm Naßfilmdicke) wurden anschließend auf einem schwarzweißen Karton deckende Abzüge der pigmentierten Lacke angefertigt.
Die Messung der CIELAB-Werte erfolgte nach dem Trocknen des Films mit einem Gonio-Spektralphotometer Multiflash® M 45 der Firma Optronik (Berlin) bei einer Winkeldifferenz von 25 und 95° zum Glanzwinkel. Die Angaben der Farbwerte (L, a*, b*) beziehen sich auf die Normlichtart D 65 und einen Betrachtungswinkel von 25°. Dabei entspricht L der Helligkeit, a* dem Rot- bzw. Grünanteil und b* dem Blau- bzw. Gelbanteil. H ist der Farbwinkel und C* das Chroma. Gemessen wurde über weißem Untergrund an einfach abgerakelten Proben.
Es wurden folgende Meßwerte erhalten:

| Winkel [°] | H [°] | C* | L | a* | b* |
|---|---|---|---|---|---|
| 25 | 266,45 | 11,94 | 35,73 | -0,74 | -11,92 |
| 75 | 267,58 | 19,70 | 20,63 | -0,83 | -19,68 |

C) Anwendung des erfindungsgemäßen Molybdänoxids als Ladungsstabilisator
1. Herstellung der Toner
Als Ausgangsmaterial für die Tonerherstellung dienten
I ein Polyesterharz-Toner (Spar II Polymerharz; Fa. Xerox, USA) und
II ein Styrolacrylatharz-Toner (Piccotoner® 1221 Polymerharz; Fa. Hercules, USA).

Es wurden jeweils 140 g des Polymerharzes in einem Laborkneter Duplex® MKD 0.6 (IKA Labortechnik Staufen, Bayern) bei 100°C geschmolzen. Nach Zugabe von 60 g Ruß Printex® 150 T (Fa. Degussa) wurde weitere 3 h bei 100°C geknetet. Das Knetgut wurde entnommen und mit rußfreiem Harz "verdünnt".
Dazu wurden 33,3 g des Knetguts in 166,7 g bei 100°C im Kneter geschmolzenes, rußfreies Polymerharz gegeben. Nach zweistündigem Kneten bei 100°C wurde das Knetgut entnommen, abgekühlt und 2 min in einer Analysenmühle A 10 (IKA Labortechnik, Schlagmessermühle) gemahlen. Durch Absieben wurde der Grobanteil (Teilchengröße > 36 µm) entfernt. Durch nochmaliges Mahlen des Grobanteils und erneutes Absieben konnte die Nutzfraktion noch vergrößert werden.
Die Applikation des Molybdänoxids auf dem Polymerharz erfolgte durch einstündiges Mischen von
a) 99 Gew.-Teilen Polymerharz und 1 Gew.-Teil Molybdänoxid,
b) 98 Gew.-Teilen Polymerharz und 2 Gew.-Teilen Molybdänoxid oder
c) 97 Gew.-Teilen Polymerharz und 3 Gew.-Teilen Molybdänoxid
in einem Glasgefäß auf einem Rollgestell.
2. Herstellung der Developer und Prüfung
Zur Herstellung der Developer wurden die mit Molybdänoxid belegten Toner jeweils im Gewichtsverhältnis 97:3 mit einem kugelförmigen Stahlcarrier (TC 101, Fa. Pometon, Maerne, Italien) vermischt und in einem Glasgefäß auf einem Rollgestell aktiviert.
Nach 10, 30, 60 und 120 min wurden jeweils Proben entnommen und deren elektrostatische Aufladung in einem Q/m-Meter (Fa. Epping, Neufahrn) bestimmt.
Dazu wurden jeweils 2,5 g Developer in eine mit einem Elektrometer gekoppelte Hard-blow-off Zelle, in die Siebe der Maschenweite 40 µm eingesetzt waren, eingewogen. Durch Ausblasen mit einem Luftstrom wurde das Tonerpulver vollständig entfernt, während die Carrierteilchen durch die Siebe in der Meßzelle zurückgehalten wurden. Dann wurde die Aufladung des Carriers, die der Aufladung der Tonerteilchen mit umgekehrtem Vorzeichen entspricht, bestimmt und durch Zurückwägen auf das Gewicht des ausgeblasenen Toners bezogen.
In der folgenden Tabelle sind die erhaltenen Meßergebnisse zusammengestellt.

**Tabelle**

| Bsp | Toner | Gehalt an Molybdänoxid [Gew.-%] | Aufladung Q/m [µC/g] nach einer Aktivierung von | | | |
|---|---|---|---|---|---|---|
| | | | 10 min | 30 min | 60 min | 120 min |
| 1a | I | 1 | - 5,4 | - 5,2 | - 4,2 | - 3,7 |
| 1b | I | 2 | - 4,7 | - 3,6 | - 3,8 | - 3,5 |
| 1c | I | 3 | - 3,7 | - 3,0 | - 3,1 | - 3,3 |
| 1V | I | - | -19,8 | -20,8 | -21,6 | -23,4 |
| 2a | II | 1 | - 6,1 | - 4,0 | - 4,3 | - 4,1 |
| 2b | II | 2 | - 6,9 | - 6,6 | - 5,6 | - 4,3 |
| 2c | II | 3 | - 7,8 | - 6,9 | - 5,7 | - 4,1 |
| 2V | II | - | - 6,5 | - 8,4 | - 9,6 | -12,1 |

Die Meßergebnisse belegen deutlich die hohe ladungsstabilisierende Wirkung des Molybdänoxids.

## Patentansprüche

1. Blaues Molybdänoxid, erhältlich durch oxidative Zersetzung von Molybdänhexacarbonyl in der Gasphase bei 100 bis 500°C.

2. Molybdänoxid nach Anspruch 1, das eine Teilchengrößenverteilung von 2 bis 100 nm aufweist.

3. Verfahren zur Herstellung von blauem Molybdänoxid gemäß Anspruch 1 oder 2, dadurch gekennzeichnet, daß man gasförmiges Molybdänhexacarbonyl bei 100 bis 500°C in einer sauerstoffhaltigen Atmosphäre oxidativ zersetzt.

4. Verfahren nach Anspruch 3, dadurch gekennzeichnet, daß man Molybdänhexacarbonyl vor der Zersetzung bei 20 bis 100°C mit einem inerten Gasstrom verdampft.

5. Verwendung von blauem Molybdänoxid gemäß Anspruch 1 oder 2 zum Einfärben von Lacken, Druckfarben, Tinten und Kunststoffen.

6. Verwendung von blauem Molybdänoxid gemäß Anspruch 1 oder 2 zur Herstellung von Tonern für die Elektrophotographie.

7. Elektrostatischer Toner, enthaltend blaues Molybdänoxid gemäß Anspruch 1 oder 2 als Ladungsstabilisator.

## Claims

1. A blue molybdenum oxide obtainable by oxidative decomposition of molybdenum hexacarbonyl in the gas phase at from 100 to 500°C.

2. A molybdenum oxide as claimed in claim 1, which has a particle size distribution of from 2 to 100 nm.

3. A process for the preparation of blue molybdenum oxide as claimed in claim 1 or 2, wherein gaseous molybdenum hexacarbonyl is oxidatively decomposed at from 100 to 500°C in an oxygen-containing atmosphere.

4. A process as claimed in claim 3, wherein molybdenum hexacarbonyl is vaporized with an inert gas stream prior to decomposition at from 20 to 100°C.

5. The use of blue molybdenum oxide as claimed in claim 1 or 2 for coloring finishes, printing inks, inks and plastics.

6. The use of blue molybdenum oxide as claimed in claim 1 or 2 for the preparation of a toner for electrophotography.

7. An electrostatic toner containing blue molybdenum oxide as claimed in claim 1 or 2 as a charge controlling agent.

## Revendications

1. Oxyde de molybdène bleu, que l'on peut obtenir par la décomposition oxydante du molybdènehexacarbonyle en phase gazeuse, à une température de 100 à 500°C.

2. Oxyde de molybdène suivant la revendication 1, qui présente une répartition granulométrique de 2 à 100 nm.

3. Procédé de préparation d'oxyde de molybdène bleu suivant la revendication 1 ou 2, caractérisé en ce que l'on décompose par voie oxydante le molybdènehexacarbonyle, à une température de 100 à 500°C, dans une atmosphère contenant de l'oxygène.

4. Procédé suivant la revendication 3, caractérisé en ce que l'on évapore le molybdènehexacarbonyle avant la décomposition à 20-100°C avec un courant d'un gaz inerte.

5. Utilisation de l'oxyde de molybdène bleu suivant la revendicaton 1 ou 2, pour la teinture ou coloration de laques ou d'émaux, d'encres d'impression, d'encres et des matières plastiques.

6. Utilisation de l'oxyde de molybdène bleu suivant la revendication 1 ou 2, pour la préparation d'encres pour l'électrophotographie.

7. Encres électrophotographiques qui contiennent de l'oxyde de molybdène bleu suivant la revendication 1 ou 2, à titre de stabilisateur de chargement.
